# EUROPEAN PATENT SPECIFICATION

(11) **EP 1 462 890 B1**
(45) Date of publication and mention of the grant of the patent: **09.05.2007**
(21) Application number: 04006527.8
(22) Date of filing: 18.03.2004
(51) Int. Cl.: G05B 19/042, G05B 23/02

(54) **Inspection data communications system and inspection data communicating method for loom**
Datenkommunikationsinspektionssystem und Datenkommunikationsinspektionsverfahren für eine Düsenwebmaschine
Système d'inspection de communication de donées et procédé d'inspection de communication de données pour un métier à tisser

(30) Priority: 28.03.2003 JP 2003092003
(43) Date of publication of application: 29.09.2004
(73) Proprietor: KABUSHIKI KAISHA TOYOTA JIDOSHOKKI, Kariya-shi, Aichi-ken 448-8671 (JP)
(72) Inventor: Iwashita, Tsunenori, Kariya-shi Aichi-ken 448-8671 (JP)
(74) Representative: HOFFMANN EITLE

(56) References cited:
- EP-A- 0 302 364
- EP-A- 0 461 078
- US-A- 5 394 334

## Description

### Background of the Invention

### Field of the Invention

The present invention relates to an inspection data communications system and an inspection data communicating method for communicating data between a control device for controlling the operation of a loom and a terminal device provided in an inspection site in which a fabric inspecting step is performed.

### Description of the Related Art

Recently, with the remarkable technological progress of the Internet and WWW (Worldwide Web), industrial equipment such as a loom, etc. as disclosed by Japanese Patent Application Laid-open No.2003-5825 and Japanese Patent Application Laid-open No.2002-204281 is provided with a Web (WWW) server, a Web browser, etc. so that it can be connected as a network device to a network such as a LAN (local area network), etc.

The fabric woven by a loom is checked for an abnormal condition at a fabric inspection site, etc., and the woven fabric in which no abnormal conditions are detected is shipped to the market. At this time, the control device for controlling the operation of the loom allows a server, etc. to centrally manage the data (for example, the data indicating the length of the woven fabric when the loom stops, the data indicating the cause of the stop of the loom, etc.) relating to the fabric woven by each loom. The terminal device mounted at a fabric inspection site for performing a fabric inspecting operation on woven fabric retrieves necessary data for a fabric inspecting operation from a server, and displays the data on a display unit, etc. Thus, the system in which a server manages data relating to the fabric woven by a loom is disclosed by the Japanese Patent Application Laid-open No.2607085. Since the data centrally managed by a server includes data (for example, data indicating the length of woven fabric, etc.) to be referenced to detect an abnormal condition (for display, a warp defect, a weft defect, a uneven weaving, etc.) of woven fabric, the efficiency of a fabric inspecting operation can be improved if a fabric inspecting operation is performed with emphasis on the point of the woven fabric based on the data.

EP 0 302 364 A2 discloses a controlling and supervising system for a loom including a network composed of a plurality of computer units useful for applications such as the automatic operation of a loom. A host computer is provided having data files for production control. A data communication personal computer is provided to receive in a file the data transmitted from the host computer and to transfer the received data to the various units and devices within the network.

EP 0 461 078 A2 describes a loom diagnosis system comprising a network of loom control computers, communication control computers and an expert computer. The loom control computers and the expert computer are interconnected via communication control computers. The loom control computers receive information regarding the operation of a loom by sensors.

Further, US 5,394,334 discloses a multistation textile machine and process for preparing for operation of the textile machine with a control and information processing system including production stations, each having at least one control device, control computers, each being assigned to a production station and connected to the control device and a data bus is connected to the control computers and a CPU including a transmitter.

### Summary of the Invention

However, as described above, to centrally manage necessary data for the fabric inspecting operation in the server, it is necessary to constantly operate a server, and there occurs the problem that the constant operation of the server is costly for maintenance, etc.

Additionally, on server fault, the required maintenance can temporarily stop the fabric inspecting operation, thereby possibly lowering the efficiency of the fabric inspecting operation.

Therefore, the present invention aims at providing an inspection data communications system and inspection data communication method having an inexpensive configuration with the efficiency of the fabric inspecting operation maintained.

This object is achieved by an inspection data communication system having the features of claim 1 and by an inspection data communication method having the features of claim 3.

An inspection data communications system communicates predetermined data relating to the inspection through a network between a control device for controlling the operation of a loom and a terminal device provided in an inspection site in which an inspection is made as to whether or not there is an abnormal condition in fabric woven by the loom. In the system, the control device includes a storage unit for storing woven fabric data relating to the fabric woven by the loom, a first reception unit for receiving from the terminal device the request data indicating the request to transmit the desired woven fabric data to the terminal device, and a first transmission unit for transmitting the woven fabric data stored in the storage unit to the terminal device based on the request data received by the first reception unit. The terminal device includes a second transmission unit for transmitting the request data, a second reception unit for receiving the woven fabric data, and a display unit for displaying the woven fabric data received by the second reception unit.

With the above-mentioned configuration, woven fabric data can be transmitted from a control device to a terminal device without a server. Therefore, the present invention can provide an inspection data communications system and inspection data communicating method having an inexpensive configuration with the efficiency of the fabric inspecting operation maintained.

Furthermore, the woven fabric data in the inspection data communications system can include the data indicating the length of the woven fabric when the loom shutdown and the data indicating the cause of the shutdown of the loom.

Furthermore, the woven fabric data in the inspection data communications system can also include the data indicating the loom which has performed a cutting process on the woven fabric, the data indicating the type of the woven fabric, the data indicating the type of the beam used in the loom of the woven fabric, the data indicating the date and time in which the woven fabric cutting process is performed, and the identification data for identification of the woven fabric.

There is also an inspection data communicating method for communicating predetermined data of the inspection through a network between the control device for controlling the operation of a loom and the terminal device provided in an inspection site in which an abnormal condition is detected if any in a fabric woven by the loom.

### Brief Description of the Drawings

FIG. 1 shows the configuration of the inspection data communications system according to an embodiment of the present invention;
FIG. 2 shows the configuration of a control device and a terminal device;
FIG. 3 is a flowchart for explanation of the operation of the terminal device;
FIG. 4 shows an example of a screen displayed on a Web browser;
FIG. 5 is a flowchart for explanation of the operation of the control device;
FIG. 6 shows the sequence for explanation of the operations between the control device and the terminal device;
FIGs. 7A and 7B show examples of the screens displayed on the Web browser and the display device; and
FIG. 8 shows the configuration of the inspection data communications system according to another embodiment of the present invention.

### Description of the Preferred Embodiments

The embodiments of the present invention are described below by referring to the attached drawings.

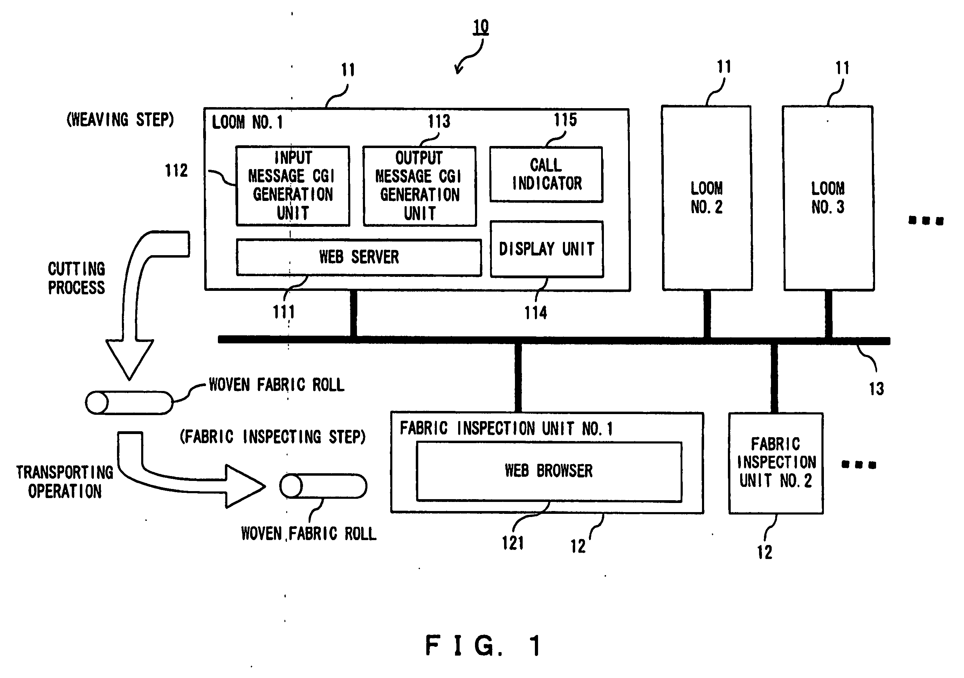

FIG. 1 shows the configuration of the inspection data communications system according to an embodiment of the present invention.

As shown in FIG. 1, an inspection data communications system 10 comprises a control device 11 (loom No. 1, loom No. 2, loom No. 3, ...) for controlling the operations of a plurality of looms, a plurality of terminal devices 12 (fabric inspection unit No. 1, fabric inspection unit No. 2, ...) provided in a fabric inspection site, etc., and a network 13 such as a LAN (local area network), etc. The control device 11 and the terminal device 12 communicate predetermined data through the network 13.

The above-mentioned control device 11 comprises a Web server 111 for communicating predetermined data with a Web browser connected to the network 13, an input message CGI (common gateway interface) generation unit 112 for generating an input screen (Web contents) to be displayed on the Web browser connected to the network 13, an output message CGI generation unit 113 for generating an output screen (Web contents) to be displayed on the Web browser, etc. connected to the network 13, a display unit 114 for displaying an output screen generated by the output message CGI generation unit 113, and a call indicator 115 operating based on the control data received by the Web server 111.

The terminal device 12 comprises a Web browser 121 for displaying an input screen generated by the input message CGI generation unit 112 of the control device 11 or an output screen generated by the output message CGI generation unit 113.

Furthermore, in the inspection data communications system 10, an operator performs a fabric inspecting operation in which it is checked whether or not there is an abnormal condition (fabric defect) such as a warp defect (a defect of fabric indicating an abnormal condition continuously occurring when the abnormal condition occurs on a part of warp in a preparatory step), a weft defect (for example, broken weft), uneven weaving (for example, uneven intervals of weft of the fabric by a fluctuation in weft density), etc. in the process of cutting fabric woven by a loom and rolled into a woven fabric roll of a predetermined length and the subsequent processes.

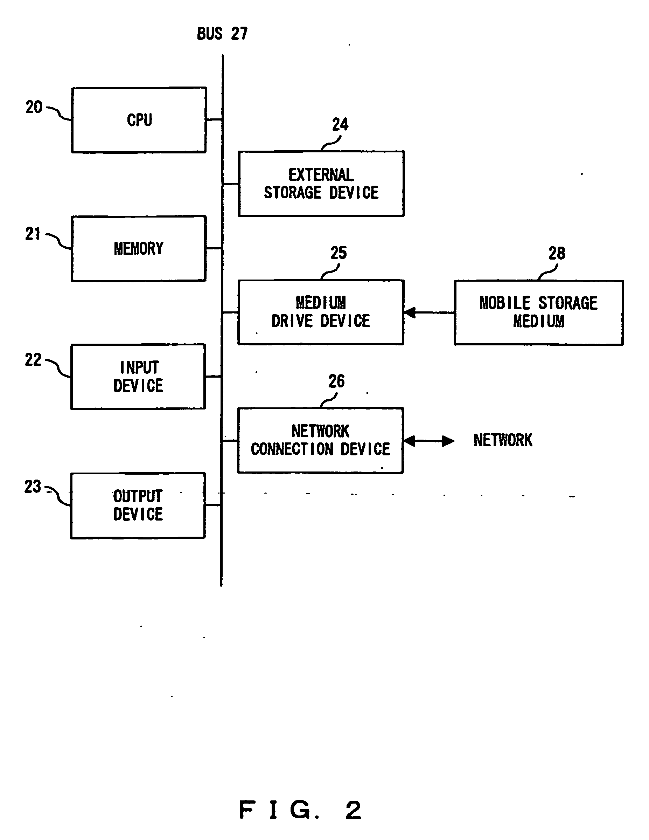

FIG. 2 shows an example the configuration of the control device 11 or the terminal device 12.

As shown in FIG. 2, the control device 11 or the terminal device 12 comprises a CPU (central processing unit) 20, memory 21 (storage unit), an input device 22, an output device 23 (display unit), an external storage device 24 (storage unit), a medium drive device 25, and a network connection device 26 (first and second transmission units, and first and second reception units), and they are interconnected through a bus 27.

The memory 21 includes, for example, ROM (read only memory), RAM (random access memory), flash memory, SRAM (static random access memory), DRAM (dynamic random access memory), etc., and stores a program used in the processes, Web contents, abnormal data described later, control data, etc. The CPU 20 performs necessary processes by executing a program using the memory 21.

The Web server facility of the Web server 111 and the Web browser facility of the Web browser 121, etc. correspond to the software components described in a program, and are respectively stored in the specific program code segments in the memory 21.

The input device 22 includes, for example, a keyboard, a mouse, etc., and is used in inputting an instruction and information from an operator.

The output device 23 includes, for example, a display, etc., configures the display unit 114 and the call indicator 115 for the control device 11, and configures, the Web browser 121 for the terminal device 12. By combining the input device 22 with the output device 23, for example, a touch panel, etc. can be generated.

The external storage device 24 includes, for example, a magnetic disk device, an optical disk device, a magneto-optical disk device, etc. An operator stores abnormal data described later and control data in the external storage device 24 so that they can be loaded into the memory 21 and used as necessary.

The medium drive device 25 drives a mobile storage medium 28, and accesses the stored contents. The mobile storage medium 28 can be a computer-readable storage medium such as a memory card, a flexible disk, CD-ROM (compact disk read only memory), an optical disk device, a magneto-optical disk, etc. An operator stores the abnormal data described later and control data in the mobile storage medium 28 so that they can be loaded into the memory 21 and used as necessary.

The network connection device 26 is controlled by a network interface, connected to an arbitrary network 13 such as a LAN, etc., and converts data for communications.

A program, etc. stored in the mobile storage medium 28, etc. is loaded into the memory 21. The CPU 20 executes the program using the data, and performs necessary processes.

Since the input screen and output screen, etc. described later can be realized using an existing program and software technology, the contents of the process of displaying them are not specifically described here.

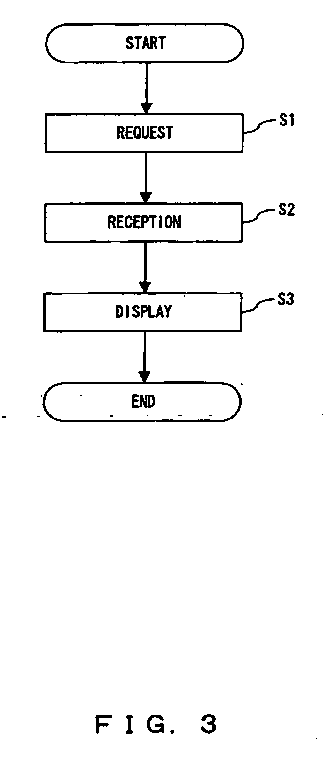

FIG. 3 is a flowchart for explanation of the operation of the terminal device 12.

First, in step S1, the terminal device 12 transmits request data to the control device 11 corresponding to the woven fabric data (for example, the name, the model name, and the beam name of the loom used in the cutting process, the date and time in which the cutting process is performed, the serial number (identification data), etc.) added to the woven fabric roll to be checked. This request data transmits the roll data (data indicating the length of the woven fabric when the loom is shut down, and data indicating the cause of the shutdown of the loom) to the terminal device 12. The predetermined data added to the woven fabric roll can be written directly to the woven fabric roll using a felt-tip pen, indicated on the tag attached to the woven fabric roll, or indicated by an IC chip or a bar code.

Then, in step S2, the terminal device 12 receives roll data based on the request data through the network 13.

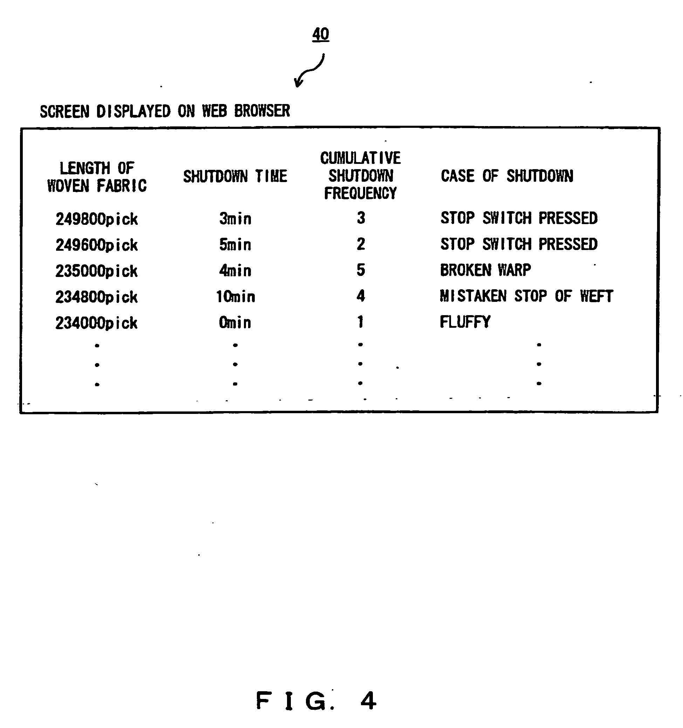

In step S3, the terminal device 12 displays the received roll data on the Web browser 121. FIG. 4 shows an example of a screen displayed on the Web browser 121. As shown in FIG. 4, a screen 40 shows the data (the number of picks, the value of meter or yard, etc.) indicating the length of the woven fabric when the loom stops, the period (minute) of the stop, the cumulative shutdown frequency for the cause of each stop, and the cause of a stop. The data displayed on the screen 40 can also display the data indicating the length of the woven fabric when an operator detects an abnormal condition of the woven fabric and the notification of the abnormal condition is input, or the data indicating the time required to remove the abnormal condition on the woven fabric. Furthermore, to display the screen shown in FIG. 4 on the Web browser 121, for example, the target screen 40 is displayed by specifying the IP address, or a link page (home page) is generated in advance, the link page is first displayed, and control can jump to the target screen 40.

Then, the operator can centrally check the fabric at a point in which there is a higher possibility of an occurrence of an abnormal condition of a fabric by performing the fabric checking process while referring to the roll data on the screen 40 displayed on the Web browser 121. Therefore, the work efficiency of the fabric inspecting operation can be improved.

Thus, by providing the Web server 111 for the control device 11 and the Web browser 121 for the terminal device 12, the operator can refer to desired roll data without a server, thereby successfully reducing the cost required in the constant operation of the server with the efficiency of the fabric inspecting operation maintained.

Described below is the method of generating roll data recorded in the control device 11.

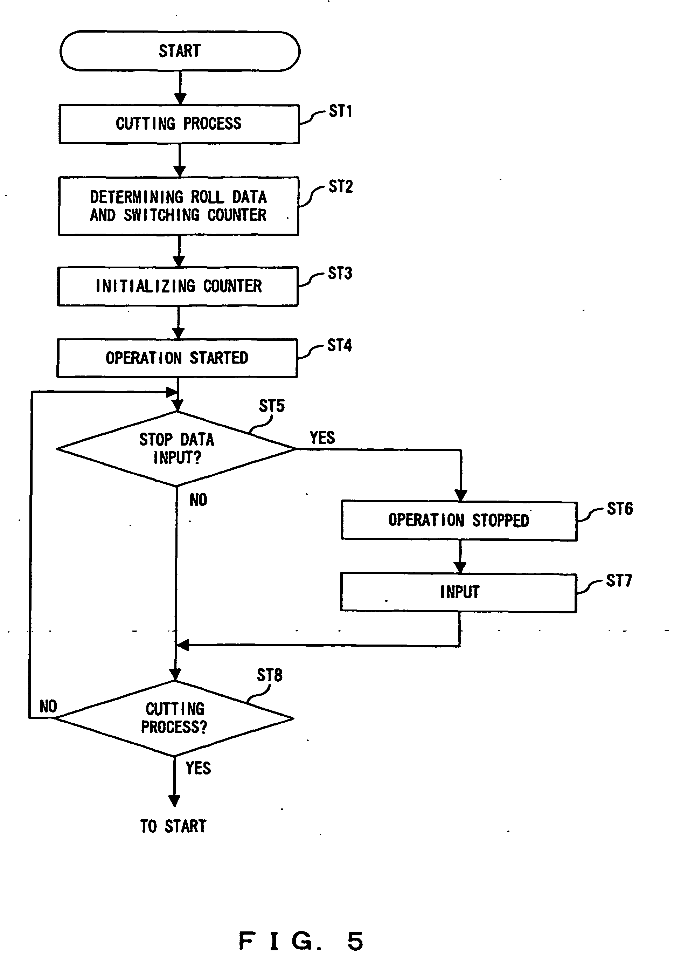

FIG. 5 is a flowchart for explanation of the operation of the control device 11.

As shown in FIG. 5, in step ST1, the operator inputs to the control device 11 through the input device 22 a request to "perform the cutting process", the "length of woven fabric immediately before the cutting process", etc.

Then, in step ST2, the control device 11 determines the roll data from the start to the stop of the operation of the loom, and prepares a predetermined counter for generation of roll data.

Then, in step ST3, the control device 11 initializes the prepared predetermined counter.

In step ST4, the control device 11 starts the operation of the loom, and starts the counter.

Then, in step ST5, the control device 11 determines whether or not the request to "stop the operation of the loom due to an abnormal condition" has been input by the operator.

If it is determined that the request data has been input (YES in step ST5), then the control device 11 stops the operation of the loom in step ST6.

Then, in step ST7, the control device 11 records the roll data input by the operator in a predetermined storage unit such as the input device 22 with the data associated with a predetermined value counted by the counter.

Then, in step ST8, the control device 11 determines whether or not the fabric to be woven has reached a predetermined length (for example, the "length of the woven fabric immediately before the cutting process" input in step ST2). When it is determined that the request data has not been input (NO in step ST5), control is passed to step ST8.

When it is determined that the woven fabric has not reached a predetermined length (NO in step ST8), then control is returned to step ST5, and it is determined whether or not the request data to "stop the operation of the loom due to an abnormal condition" has been input.

If it is determined that the woven fabric has reached a predetermined length (YES in step ST8), then control is returned to the starting point.

Described below is the operation of the control device 11 and the terminal device 12 when an abnormal condition is detected on a woven fabric roll during the fabric inspecting step, and the abnormal data indicating the abnormal condition is transmitted from the terminal device 12 to the control device 11.

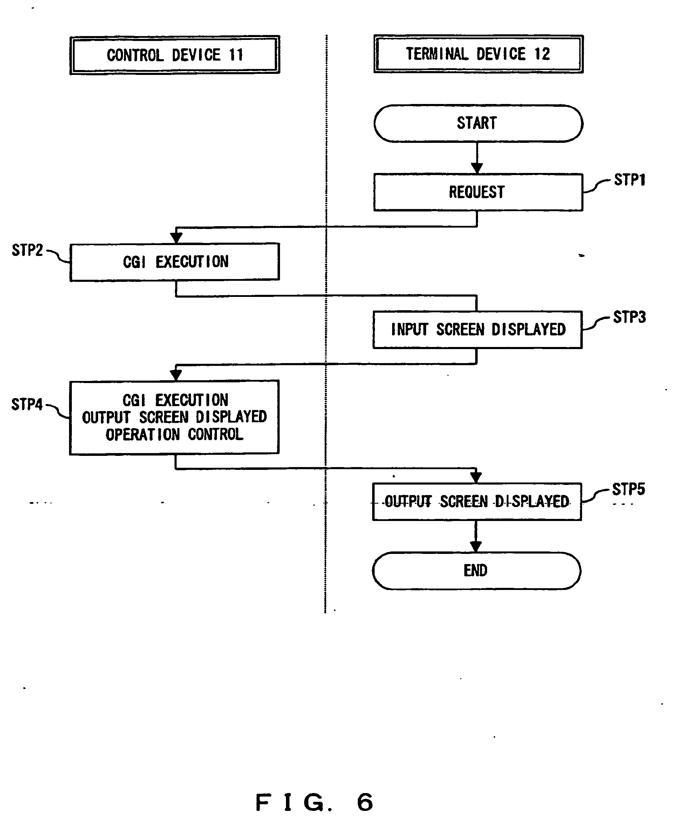

FIG. 6 shows the sequence of the explanation of the operations between the control device 11 and the terminal device 12.

As shown in FIG. 6, in step STP1, the terminal device 12 transmits to the control device 11 the request data to transmit an input screen for input of a message about the abnormal condition of woven fabric.

Then, in step STP2, upon receipt of the request data, the control device 11 generates a predetermined input screen by the input message CGI generation unit 112, and transmits it to the terminal device 12.

Then, in step STP3, the terminal device 12 displays the received input screen on the Web browser 121. Then, the operator inputs a message, etc. to the input screen displayed on the Web browser 121.

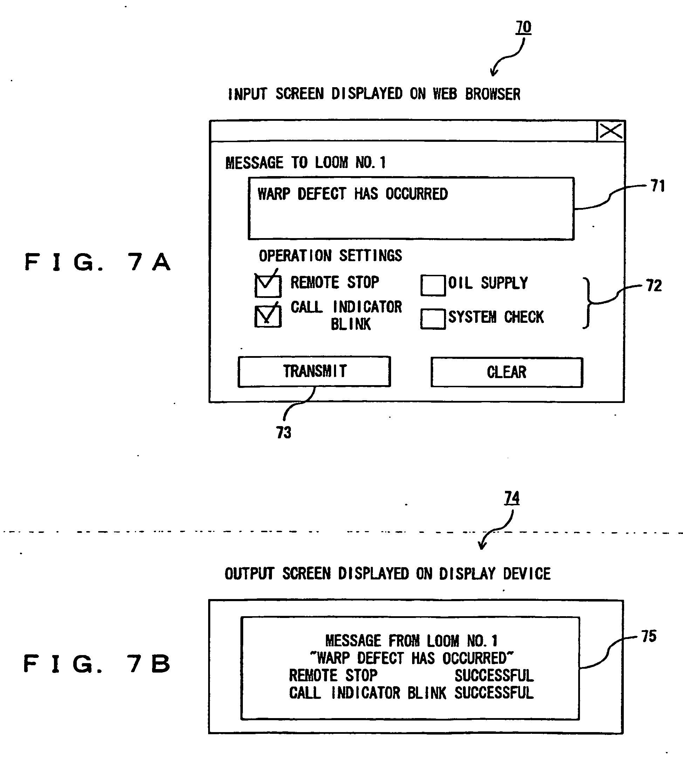

FIG. 7A shows an example of the input screen displayed on the Web browser 121. As shown in FIG. 7A, an input screen 70 comprises an input column 71
in which an arbitrary message can be input, a selection frame 72 in which the type of operation control of the loom can be selected by pressing and clicking a predetermined frame, and a transmission button 73 for transmission of the abnormal data indicating the message input to the input column 71 and the control data indicating the type of operation control selected in the selection frame 72 to the control device 11.

In the example shown in FIG. 7A, the message "warp defect has occurred." is input to the input column 71, and the selection frame 72 of "remote stop" and "call indicator blink". When the terminal device 12 checks that the transmission button 73 has been pressed, it transmits abnormal data and control data to the control device 11.

Then, in step STP4, the control device 11 controls the operation of the loom based on the received abnormal data and control data, and the output message CGI generation unit 113 generates a predetermined output screen based on the resultant data indicating the result of controlling the operation of the loom, and displays the output screen on the display unit 114. When the control of blinking the call indicator 115 is performed based on the control data, and when the control device 11 detects that the call indicator 115 blinks, the resultant data is generated.

FIG. 7B shows an example of an output screen displayed on the display unit 114. As shown in FIG. 7B, an output screen 74 includes a display column 75 displaying the name of the message destination terminal device 12, the message input in the input column 71, and whether or not the operation control of the loom has been successfully performed. In the example shown in FIG. 7B, the display column 75 shows "message from loom No. 1, "warp defect has occurred", remote stop successful, call indicator blink successful".

In step STP5, the terminal device 12 receives the data on the output screen 74 transmitted from the control device 11, and displays the output screen 74 on the Web browser 121.

Thus, by providing the Web server 111 for the control device 11 and the Web browser 121 for the terminal device 12, the message input to the input column 71 can be displayed on the display unit 114 of the control device 11 without a server. Therefore, the introductory cost required when the inspection data communications system 10 is implemented and the operating cost required when the inspection data communications system 10 is operated can be lower than the existing inspection data communications system requiring a server.

Furthermore, since no server is required, various systems ranging from a small inspection data communications system 10 in which only several control devices 11 are connected to the network 13 to a large inspection data communications system 10 in which hundreds or thousands of control devices 11 are connected to the network 13 can be easily designed.

Additionally, since no server is required, the reduction of the work efficiency in the fabric inspecting step which can occur by the shutdown of a server can be suppressed.

### <Other Embodiments>

The present invention is not limited to the above-mentioned embodiments, but can be applied to various other configurations in the scope of the claims of the present invention. For example, the configuration can be changed as follows.

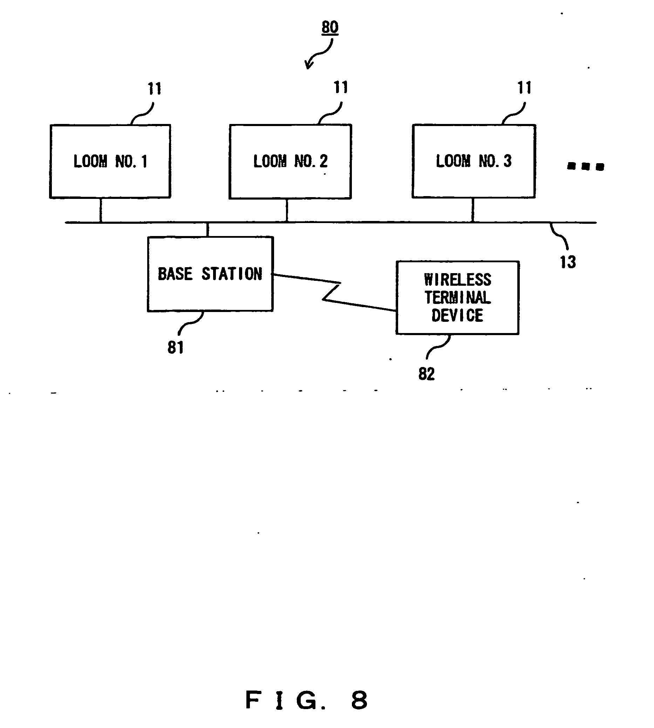

(1) FIG. 8 shows the configuration of the inspection data communications system according to another embodiment of the present invention. The components similar to those shown in FIG. 1 are assigned the same reference numerals and the explanation is omitted here.
   As shown in FIG. 8, an inspection data communications system 80 comprises a base station 81 loaded with a wireless LAN facility connected to the network 13, and a wireless terminal device 82 for communicating predetermined data (for example, the above-mentioned request data, roll data, etc.) with the control device 11 through the base station 81. The wireless terminal device 82 can be a personal computer with a wireless LAN facility and a PDA (personal digital assistant), etc., and can be provided with the Web browser 121 as with the terminal device 12 shown in FIG. 1.
(2) In step ST6 shown in FIG. 5 according to the above-mentioned embodiment, when the control device 11 determines that request data has been input, it stops the operation of the loom, and records the roll data in the counter. However, the roll data can be recorded in the counter without stopping the operation of the loom eventhough request data is input. That is, control is passed from step ST5 to step ST7 by omitting the step ST6.
(3) The control device 11 of the inspection data communications system 10 according to the above-mentioned embodiment can not only control the operation of a loom, but also control the operations of various types of industrial equipment. That is, the control device 11 can be applied to any type of industrial equipment as long as it comprises at least the Web server 111, the input message CGI generation unit 112, the output message CGI generation unit 113, and the display unit 114.
(4) In step ST7 shown in FIG. 5 according to the above-mentioned embodiment, the roll data input by the operator is recorded in a predetermined storage unit, but the roll data can be obtained by a sensor capable of detecting an abnormal condition of woven fabric, and can be recorded in a predetermined storage unit.

As described above, according to the present invention, woven fabric data can be transmitted from the control device 11 to the terminal device 12 without using a server. Therefore, an inexpensive inspection data communications system can be realized with the efficiency of the fabric inspecting operation maintained.

## Claims

1. An inspection data communication system in which at least one of a plurality of control devices (11) and a terminal device (12) exchange pre-determined types of data via a network (13), wherein
the control device (11) controls operation of a loom; the terminal device (12) is located in an inspection area allocated for conducting an inspection for determining whether the fabric woven on the loom is associated with any defect; **characterized in that**:
the control device is equipped with
a first reception unit (26) for receiving request data transmitted from the terminal device (12),
a generation unit (112) for generating an input screen for input of a message relating to a defect associate with fabric woven on the loom according to the request data received by the first reception unit (26), and
a first transmission unit (26) for transmitting the input screen generated by the generation unit (112) to the terminal device (12); and
the terminal device is equipped with
a second transmission unit (26) for transmitting, toward the control device (11), the request data that is for use in transmitting the input screen to the terminal device (12),
a second reception unit (26) for receiving the input screen and
a display unit (121) for displaying the input screen received by the second reception unit (26),
wherein the terminal device (12) is adapted to transmit abnormal data related to said defect through said network (13) to the control device (11).

2. The inspection data communication system according to claim 1, wherein;
the second transmission unit (26) transmits, to the control device (11), a message input into the input screen presented by the terminal device (12);
the first transmitting unit (26) transmits, to the terminal device (12), a control result of controlling, according to the message received by the first reception unit (26), operation of the loom;
the second reception unit (26) receives the control result; and
the display unit (121) displays the control result received by the second reception unit (26).

3. An inspection data communication method for exchanging pre-determined types of data via a network (13) between at least one of a plurality of control devices (11) and a terminal device (12), wherein the terminal device (12) is located in an inspection area allocated for conducting an inspection for determining whether fabric woven on a loom is associated with any defect and the control device (11) controls operation of the loom and the method **characterized in** the following steps:
transmitting, from the terminal device to the control device (11), request data that is required for use in transmitting an input screen for input of a message relating to the defect associated with the fabric woven on the loom to the terminal device (12),
receiving the request data transmitted from the terminal device (12);
generating the input screen according to the request data by using the control device (11);
transmitting the input screen from the control device (11) to the terminal device (12);
receiving the input screen by the terminal device (12);
displaying the input screen on a display unit (121) of the terminal device (12), and
transmitting abnormal data related to said defect through said network (13) from the terminal device to the control device.

4. The inspection data communication method according to Claim 3, wherein the method comprises:
transmitting, from the terminal device (12) to the control device (11), a message input into the input screen presented by the terminal device (12);
transmitting, from the control device (11) to the terminal device (12), a control result of controlling, according to the message, operation of the loom; and
displaying the control result on the display unit (121).

## Patentansprüche

1. Ein Überprüfungsdatenkommunikationssystem, in dem mindestens eines einer Vielzahl von Steuergeräten (11) und ein Endgerät (12) vorbestimmte Arten von Daten über ein Netzwerk (13) austauschen, wobei
das Steuergerät (11) einen Betrieb eines Webstuhls steuert;
das Endgerät (12) sich in einem Überprüfungsbereich befindet, der zugewiesen ist zum Durchführen einer Überprüfung zum Bestimmen, ob der mit dem Webstuhl gewobene Stoff im Zusammenhang steht mit irgendwelchen Defekten;
**dadurch gekennzeichnet, dass**:
das Steuergerät ausgestattet ist mit
einer ersten Empfangseinheit (26) zum Empfangen von Anforderungsdaten, übertragen von dem Endgerät (12),
einer Erzeugungseinheit (112) zum Erzeugen eines Eingabebildschirms zum Eingeben einer Nachricht bezüglich einem Defekt, der mit mit dem Webstuhl gewobenen Stoff in Zusammenhang steht, gemäß den Anforderungsdaten, die durch die erste Empfangseinheit (26) empfangen werden, und
einer ersten Übertragungseinheit (26) zum Übertragen des Eingabebildschirms, erzeugt durch die Erzeugungseinheit (112), an das Endgerät (12); und
das Endgerät ausgestattet ist mit
einer zweiten Übertragungseinheit (26) zum Übertragen in Richtung des Steuergeräts (11), der Anforderungsdaten, die zur Verwendung im Übertragen des Eingabebildschirms an das Endgerät (12) vorhanden sind,
einer zweite Empfangseinheit (26) zum Empfangen des Eingabebildschirms und
einer Anzeigeeinheit (121) zum Anzeigen des Eingabebildschirms, der von der zweiten Empfangseinheit (26) empfangen wird,
wobei das Endgerät (12) ausgebildet ist zum Übertragen von abnormalen Daten, hinsichtlich des Defekts, durch das Netzwerk (13) an das Steuergerät (11).

2. Das Überprüfungsdatenkommunikationssystem nach Anspruch 1, wobei;
die zweite Übertragungseinheit (26) an das Steuergerät (11) eine Nachrichteneingabe in den Eingabebildschirm überträgt, der von dem Endgerät (12) präsentiert wird;
die erste Übertragungseinheit (26) an das Endgerät (12) ein Steuerergebnis eines Steuerns des Betriebs des Webstuhls überträgt, gemäß der Nachricht, die von der ersten Empfangseinheit (26) empfangen wird;
die zweite Empfangseinheit (26) das Steuerergebnis empfängt; und
die Anzeigeeinheit (121) das Steuerergebnis anzeigt, das von der zweiten Empfangseinheit (26) empfangen wird.

3. Ein Überprüfungsdatenkommunikationsverfahren zum Austauschen von vorbestimmten Arten über ein Netzwerk (13) zwischen mindestens einem einer Vielzahl von Steuergeräten (11) und einem Endgerät, wobei das Endgerät (12) sich in einem Überprüfungsbereich befindet, der zugewiesen ist für ein Durchführen einer Überprüfen zum Bestimmen, ob mit einem Webstuhl gewobener Stoff in Zusammenhang steht mit irgendeinem Defekt und das Steuergerät (11) einen Betrieb des Webstuhls steuert, und das Verfahren durch die folgenden Schritte **gekennzeichnet** ist:
Übertragen von dem Endgerät an das Steuergerät (11) von Anforderungsdaten, die benötigt werden zur Verwendung im Übertragen eines Eingabebildschirms zum Eingeben einer Nachricht bezüglich des Defekts, der mit dem mit dem Webstuhl gewobenen Stoff im Zusammenhang steht, an das Endgerät (12);
Empfangen der Anforderungsdaten, die von dem Endgerät (12) übertragen werden;
Erzeugen des Eingabebildschirms gemäß den Anforderungsdaten unter Verwendung des Steuergeräts (11);
Übertragen des Eingabebildschirms von dem Steuergerät (11) an das Endgerät (12);
Empfangen des Eingabebildschirms durch das Endgerät (12);
Anzeigen des Eingabebildschirms auf einer Anzeigeeinheit (121) des Endgeräts (12), und
Übertragen von abnormalen Daten bezüglich des Defekts durch das Netzwerk (13) von dem Endgerät an das Steuergerät.

4. Das Überprüfungsdatenkommunikationsverfahren nach Anspruch 3, wobei das Verfahren umfasst:
Übertragen von dem Endgerät (12) and das Steuergerät von einer Nachricht, die in den Eingabebildschirm eingegeben wird, der von dem Endgerät (12) präsentiert wird;
Übertragen von dem Steuergerät (11) an das Endgerät (12) eines Steuerergebnisses eines Steuerns eines Betriebs des Webstuhls, gemäß der Nachricht; und
Anzeigen des Steuerergebnisses auf der Anzeigeeinheit (121).

## Revendications

1. Système de communication de données d'inspection dans lequel au moins un dispositif de contrôle parmi plusieurs dispositifs de contrôle (11) et un dispositif terminal (12) échangent des types prédéterminés de données via un réseau (13), dans lequel
le dispositif de contrôle (11) contrôle le fonctionnement de métier à tisser,
le dispositif terminal (12) est monté dans une zone d'inspection destinée à mettre en oeuvre une inspection pour déterminer le fait de savoir si l'étoffe tissée sur le métier à tisser est liée à un défaut quelconque,
**caractérisé en ce que**:
le dispositif de contrôle est équipé :
d'une première unité de réception (26) pour recevoir des données de demande émises par le dispositif terminal (12),
d'une unité de génération (112) pour générer un écran d'entrée pour entrer un message concernant un défaut lié à une étoffe tissée sur le métier à tisser en fonction des données de demande reçues par la première unité de réception (26), et
d'une première unité de transmission (26) pour transmettre l'écran d'entrée généré par
l'unité de génération (112) au dispositif terminal (12), et
une deuxième unité de transmission (26) pour transmettre, en direction du dispositif de contrôle (11), les données de demande à utiliser pour transmettre l'écran d'entrée au dispositif terminal (12),
une deuxième unité de réception (26) pour recevoir l'écran d'entrée, et
une unité d'affichage (121) pour afficher l'écran d'entrée reçu par la deuxième unité de réception (26),
le dispositif terminal (12) étant conçu pour transmettre des données anormales concernant ledit défaut via ledit réseau (13) au dispositif de contrôle (11).

2. Système de communication de données d'inspection selon la revendication 1, dans lequel:
la deuxième unité de transition (26) transmet, au dispositif de contrôle (11), une entrée de message dans l'écran d'entrée présenté par le dispositif terminal (12) ;
la première unité de transmission (26) transmet, au dispositif terminal (12), un résultat de contrôle issu de l'opération de contrôle, conformément au message reçu par la première unité de réception (26), du métier à tisser ;
la deuxième unité de réception (26) reçoit le résultat de contrôle ; et
l'unité d'affichage (121) affiche le résultat de contrôle reçu par la deuxième unité de réception (26).

3. Procédé de communication de données d'inspection pour échanger des types prédéterminés de données via un réseau (13) entre au moins un dispositif de contrôle (11) parmi plusieurs de ces derniers et un dispositif terminal (12), le dispositif terminal (12) étant monté dans une zone d'inspection destinée à mettre en oeuvre une inspection pour déterminer le fait de savoir si une étoffe tissée sur un métier à tisser est liée à un défaut quelconque, et le dispositif de contrôle (11) contrôlant le fonctionnement du métier à tisser, le procédé étant **caractérisé par** les étapes suivantes consistant à :
transmettre, du dispositif terminal au dispositif de contrôle (11), des données de demande à utiliser dans la transmission au dispositif terminal (12) d'un écran d'entrée pour l'entrée d'un message concernant le défaut associé à l'étoffe tissée sur le métier à tisser ;
recevoir les données de demande transmises par le dispositif terminal (12) ;
générer l'écran d'entrée conformément aux données de demande en utilisant le dispositif de contrôle (11);
transmettre l'écran d'entrée du dispositif de contrôle (11) au dispositif terminal (12) ;
recevoir l'écran d'entrée via le dispositif terminal (12) ;
afficher un écran d'entrée sur une unité d'affichage (121) du dispositif terminal (12) ; et
transmettre des données anormales concernant ledit défaut via ledit réseau (13) du dispositif terminal au dispositif de contrôle.

4. Procédé de communication de données d'inspection selon la revendication 3, dans lequel le procédé comprend le fait de :
transmettre, du dispositif terminal (12) au dispositif de contrôle (11), une entrée de message dans l'écran d'entrée présenté par le dispositif terminal (12) ;
transmettre, du dispositif de contrôle (11) au dispositif terminal (12), un résultat de contrôle issu du contrôle, conformément au message, du fonctionnement du métier à tisser ; et
afficher le résultat de contrôle sur l'unité d'affichage (121).
